# EUROPÄISCHE PATENTSCHRIFT

(11) **EP 2 651 682 B1**
(45) Veröffentlichungstag und Bekanntmachung des Hinweises auf die Patenterteilung: **10.01.2018**
(21) Anmeldenummer: 11790727.9
(22) Anmeldetag: 24.11.2011
(51) Int. Cl.: B60K 6/48

(54) **VERFAHREN ZUR MONTAGE VON ANTRIEBSSTRANGKOMPONENTEN EINES HYBRIDANTRIEBS**
METHOD FOR MOUNTING DRIVE TRAIN COMPONENTS OF A HYBRID DRIVE
PROCÉDÉ DE MONTAGE DE COMPOSANTS DE CHAÎNE CINÉMATIQUE D'UN ENTRAÎNEMENT HYBRIDE

(30) Priorität: 17.12.2010 DE 102010063388
(43) Veröffentlichungstag der Anmeldung: 23.10.2013
(73) Patentinhaber: Bayerische Motoren Werke Aktiengesellschaft, 80809 München (DE)
(72) Erfinder: OHNEMUS, Ulrich, 82285 Hattenhofen (DE); SIMKOVICS, Reinhard, 85356 Freising (DE); WOLF, Lothar, 83607 Holzkirchen (DE); MARTIN, Alexander, 80995 München (DE)
(86) Internationale Anmeldenummer: PCT/EP2011/005906
(87) Internationale Veröffentlichungsnummer: WO 2012/079697

(56) Entgegenhaltungen:
- EP-A1- 1 736 345
- DE-A1-102006 056 512
- DE-A1-102008 042 636
- DE-A1-102008 043 290
- DE-A1-102008 050 054
- US-A1- 2008 093 135

## Beschreibung

Die vorliegende Erfindung betrifft ein Verfahren zur Montage von Antriebsstrangkomponenten eines Hybridantriebs gemäß den Merkmalen des Patentanspruches 1. Aus der US 2008/0093135 A ist ein Automatikgetriebe mit einer Eingangswelle bekannt, auf die eine Kupplungseinheit aufgesteckt wird. Auf der der Eingangswelle gegenüberliegenden Seite ist eine Zwischenwelle vorgesehen. Auf die Zwischenwelle wird eine elektrische Maschine aufgesteckt. Sämtliche Komponenten sind in einem separat ausgebildeten Gehäuse untergebracht.

Zum technischen Hintergrund der Erfindung zählen die DE 10 2008 043 290 A, EP 1 736 345 A, DE 10 2006 056 512 A, DE 10 2008 042 636 A sowie die DE 10 2008 050 054 A.

Seit geraumer Zeit ist ein Trend zur "Hybridisierung" herkömmlicher Fahrzeugantriebe zu erkennen. Manche Hersteller bieten Fahrzeuge mit einem Automatikgetriebe wahlweise mit oder ohne vorgeschaltetem "Hybridkopf" an. Aus Kostengründen ist man bestrebt, bei der Hybridisierung eines "herkömmlichen Antriebsstrangs" möglichst wenige Komponenten zu ändern bzw. zu ersetzen.

Aufgabe der Erfindung ist es, ein Verfahren zur Montage von Antriebsstrangkomponenten eines Hybridantriebs zu schaffen, das effizient durchführbar ist und das berücksichtigt, dass einzelne der zu montierenden Komponenten- bzw. Baugruppen von unterschiedlichen Herstellern vormontiert und geliefert werden. Die Aufgabe beinhaltet die Schaffung montageprozessoptimiert gestalteter Antriebsstrangkomponenten.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Es sei vorweggeschickt, dass die Erfindung nicht auf ein Verfahren beschränkt ist, sondern auch die montagegerechte (optimierte) Gestaltung der einzelnen bei dem Verfahren verwendeten Komponenten umfasst.

Kernkomponenten, die für die Durchführung des erfindungsgemäßen Verfahrens benötigt werden, sind ein Automatikgetriebe und ein sogenannter Hybridkopf.

Der Begriff "Automatikgetriebe" ist äußerst breit zu interpretieren. Er umfasst grundsätzlich sämtliche Getriebearten, bei denen Übersetzungen bzw. Gänge elektronisch gesteuert geschaltet werden können. Der Begriff Automatikgetriebe umfasst insbesondere Planetenradautomatikgetriebe mit mehreren diskreten Gangstufen. Prinzipiell umfasst er allerdings auch automatisierte Handschaltgetriebe, bei denen einzelne Gangstufen vom Fahrer über ein Wählelement angewählt werden können, sowie stufenlose Getriebe etc.

Ein derartiges Automatikgetriebe weist ein Getriebegehäuse und eine Getriebeeingangswelle auf.

Der Begriff "Hybridkopf" ist ganz allgemein im Sinne einer "Drehmomentüberlagerungseinrichtung" zu verstehen, die mindestens einen ersten Eingang, einen zweiten Eingang und mindestens einen Ausgang aufweist. Der Hybridkopf weist primär oder ausschließlich mechanische und hydraulische Komponenten auf. Mit dem ersten Eingang kann eine erste Antriebsmaschine gekoppelt sein, die z. B. durch einen Verbrennungsmotor gebildet sein kann. Mit dem zweiten Eingang des Hybridkopfes kann der Rotor einer elektrischen Maschine gekoppelt sein. Mit dem Ausgang kann die Getriebeeingangswelle des Automatikgetriebes gekoppelt sein. Bei dem Hybridkopf handelt es sich um eine separate bzw. eigenständige, komplett vormontierte bzw. vormontierbare Baugruppe, die ein Hybridkopfgehäuse, ein erstes und ein zweites Antriebselement sowie ein Abtriebselement aufweist. Das zweite Antriebselement wird im Folgenden auch als Rotorantriebselement bezeichnet.

Gemäß der Erfindung wird zunächst das Hybridkopfgehäuse an das Getriebegehäuse des Automatikgetriebes angeflanscht. "Angeflanscht" bedeutet, dass die beiden Gehäuse miteinander verbunden werden, z.B. über Schraubverbindungen. Dabei wird das Abtriebselement des Hybridkopfes über eine Welle-Nabe-Verbindung mit der Getriebeeingangswelle des Automatikgetriebes drehgekoppelt.

In einem weiteren Montageschritt wird die elektrische Maschine, die ebenfalls als separate Einheit betrachtet werden kann, in das Hybridkopfgehäuse eingebaut, wobei der Stator der elektrischen Maschine mit dem Hybridkopfgehäuse und der Rotor mit dem das zweite Antriebselement des Hybridkopfes bildenden Rotorantriebselement verbunden wird.

Gemäß der Erfindung können das Automatikgetriebe und/oder der vormontierte Hybridkopf und/oder die elektrische Maschine und/oder das Hybridkopfgehäuse wahlweise "front/quer" oder "längs" in einen Motorraum eines Fahrzeugs eingebaut werden. "Front/quer" bedeutet, dass eine Hauptdrehachse der genannten Komponenten im Wesentlichen quer zu einer Fahrzeuglängsrichtung angeordnet ist. "Längs" bedeutet, dass eine Hauptdrehrichtung der genannten Komponenten im Wesentlichen parallel zu einer Fahrzeuglängsrichtung angeordnet ist.

Bei dem Automatikgetriebe, dem Hybridkopf und der elektrischen Maschine handelt es sich vorzugsweise um separate, vormontierte und einzeln vor dem "Zusammenbau" hinsichtlich ihrer Funktionsfähigkeit geprüfte Komponenten, die jeweils oder zumindest teilweise von unterschiedlichen Lieferanten geliefert werden können.

Das Automatikgetriebe kann bereits vor der Montage des Hybridkopfes mit Getriebeöl befüllt werden. Das Automatikgetriebe kann insbesondere bereits vom Getriebehersteller vormontiert, geprüft und mit Getriebeöl befüllt werden und anschließend zum Fahrzeughersteller geliefert werden.

Das Automatikgetriebe kann auf der dem Hybridkopf zugewandten Seite durch einen Gehäusedeckel öldicht verschlossen werden. Der Gehäusedeckel kann beim Getriebehersteller mit dem übrigen Getriebegehäuse von der Seite des Hybridkopfes her verschraubt werden.

Eine zentrale "Schnittstelle" zwischen dem Hybridkopf und dem Automatikgetriebe ist auf der Seite des Hybridkopfes durch das Abtriebselement und auf der Seite des Automatikgetriebes durch die mit dem Abtriebselement drehzukoppelnde Getriebeeingangswelle gebildet. Es kann vorgesehen sein, dass die Getriebeeingangswelle aus dem Getriebegehäuse bzw. aus einer entsprechenden Öffnung des Gehäusedeckels des Automatikgetriebes heraussteht.

Um Beschädigungen bzw. Verschmutzungen des Automatikgetriebes während des Transports vom Getriebehersteller zum Fahrzeughersteller zu verhindern, kann das Automatikgetriebe auf der Seite der Getriebeeingangswelle mit einer Schutzabdeckung geschützt angeliefert werden. Bei der Schutzabdeckung kann es sich z.B. um einen auf die Stirnseite des Getriebegehäuses aufgesetzten oder aufgeschraubten Schutzdeckel handeln.

Zur Versorgung der einzelnen Schmierstellen des Automatikgetriebes mit Schmieröl kann eine mechanisch angetriebene Getriebeölpumpe vorgesehen sein. Die mechanisch angetriebene Getriebeölpumpe kann innerhalb des Getriebegehäuses angeordnet sein und über eine aus dem Getriebegehäuse, insbesondere aus einer Öffnung des Getriebedeckels, herausstehende Antriebswelle angetrieben werden. Die Antriebswelle für die mechanisch angetriebene Ölpumpe kann durch eine Hohlwelle gebildet sein, in der die Getriebeeingangswelle drehbar angeordnet ist. Hohlwelle und Getriebeeingangswelle können koaxial angeordnet sein und aus dem Getriebedeckel des Automatikgetriebes als "Antriebsschnittstellen" des Automatikgetriebes heraus stehen. Vor bzw. während des Anflanschens des Hybridkopfes an das Automatikgetriebegehäuse wird also ein "Ölpumpenantrieb" des Hybridkopfes mit der Antriebswelle für die Getriebeölpumpe drehgekoppelt. Der Ölpumpenantrieb des Hybridkopfes kann z. B. über einen oder mehrere Freiläufe mit der Antriebswelle des Automatikgetriebes, die zum Antrieb der mechanisch angetriebenen Getriebeölpumpe vorgesehen ist, verbunden bzw. gekoppelt werden.

Um eine einwandfreie Ausrichtung des Hybridkopfes in Bezug auf das Automatikgetriebe sicherzustellen, kann das Hybridkopfgehäuse mittels eines Zentrierbunds radial in Bezug auf das Getriebegehäuse zentriert werden.

Zur Abdichtung des Hybridkopfgehäuses gegenüber dem Automatikgetriebegehäuse kann zwischen eine dem Automatikgetriebegehäuse zugewandte Stirnfläche des Hybridkopfgehäuses und eine dem Hybridkopfgehäuse zugewandte Stirnfläche des Automatikgetriebegehäuses eine Dichtung eingebracht werden, welche öldicht abdichtet. Bei der Dichtung kann es sich beispielsweise um eine Flächendichtung, z. B. aus Papier, um eine Elastomerdichtung, eine Flüssigdichtung, eine Gummiformdichtung (im Bypass zu einer Verschraubung auf Block) oder um eine andere öldichtende Dichtung handeln.

Beim Anflanschen des Hybridkopfgehäuses kann das Hybridkopfgehäuse von der Seite des Hybridkopfgehäuses her mit dem Getriebegehäuse verschraubt werden, so dass die zwischen die beiden Gehäuse eingebrachte Dichtung zusammengepresst wird.

Nach einer Weiterbildung der Erfindung hat der Hybridkopf nicht nur die Funktion einer Drehmomentüberlagerungseinrichtung, sondern weist auch eine als Anfahrkupplung geeignete und bestimmte Kupplung auf, die es ermöglicht, aus dem Stand heraus und angetrieben durch eines der beiden "Antriebselemente" oder durch beide Antriebselemente des Hybridkopfes anzufahren. Zur Betätigung der Anfahrkupplung kann eine Betätigungshydraulik im Hybridkopf vorgesehen sein.

Bei der Anfahrkupplung kann es sich um eine in einem Öl, insbesondere im Getriebeöl des Automatikgetriebes, laufende Mehrscheibenlamellenkupplung handeln. Sofern die Anfahrkupplung an den Ölkreislauf des Automatikgetriebes angeschlossen ist, kann vorgesehen sein, dass die Anfahrkupplung über einen in der Getriebeeingangswelle vorgesehenen Ölkanal, der einen oder mehrere radial verlaufende Stichkanäle aufweist, mit Getriebeöl des Automatikgetriebes versorgt wird.

Nach einer Weiterbildung der Erfindung weist der Hybridkopf ferner einen in dem Hybridkopf angeordneten Torsionsschwingungsdämpfer auf, welcher die in die Getriebeeingangswelle des Automatikgetriebes eingeleiteten Drehschwingungen minimieren bzw. dämpfen soll.

Beim Einbau der elektrischen Maschine in den Hybridkopf muss sichergestellt sein, dass der Rotor der elektrischen Maschine exakt koaxial in Bezug auf den Stator ausgerichtet ist. Gemäß der Erfindung wird vorgeschlagen, dass ein als Montagehilfe fungierendes Positionierungselement verwendet wird, welches bei noch nicht eingebauter elektrischer Maschine den Rotor exakt in Bezug auf den Stator positioniert. Die "gesamte" elektrische Maschine kann dann als vorgefertigte und vorgeprüfte Baugruppe in den Hybridkopf eingesetzt werden. Anschließend wird der Stator mit dem Hybridkopfgehäuse verbunden, z. B. verschraubt. Der Rotor wird mit dem Rotorantriebselement verbunden bzw. verschraubt. Dadurch ist sichergestellt, dass auch nach dem Einbau und der Montage des Stators und des Rotors der Rotor exakt in Bezug auf den Stator positioniert bleibt. Nach dem Festschrauben des Stators und des Rotors kann das als Montagehilfe verwendete Positionierungselement entfernt werden.

Nach dem Einbau der elektrischen Maschine wird ein Verbrennungsmotorantriebselement des Hybridkopfes mit einer Kurbelwelle eines Verbrennungsmotors gekoppelt. Das Verbrennungsmotorantriebselement ist ganz allgemein eine Komponente, die mittelbar oder unmittelbar von dem Verbrennungsmotor bzw. einer Kurbelwelle des Verbrennungsmotors antreibbar ist. In der eingangs erwähnten Terminologie entspricht das Verbrennungsmotorantriebselement dem ersten Eingang des Hybridkopfes.

Das Hybridkopfgehäuse kann unmittelbar oder über ein ringartiges Distanzelement an ein Gehäuse des Verbrennungsmotors angeflanscht werden. Zur Kompensation von Drehschwingungen der Kurbelwelle des Verbrennungsmotors kann diese über einen Torsionsschwingungsdämpfer mit dem Verbrennungsmotorantriebselement gekoppelt sein. Genauer gesagt kann ein Abtriebselement des Torsionsschwingungsdämpfers mit dem Verbrennungsmotorantriebselement des Hybridkopfes verschraubt und anschließend ein Antriebselement des Torsionsschwingungsdämpfers mit der Kurbelwelle drehgekoppelt werden. An das Antriebselement des Torsionsschwingungsdämpfers kann ein Starterzahnkranz angeschraubt sein, der mit einem Starter bzw. Anlasser zusammenwirkt. Über den Starter bzw. Anlasser kann der Verbrennungsmotor gestartet werden.

Um im Betrieb auftretende Relativbewegungen des Antriebselements des Torsionsschwingungsdämpfers in Axialrichtung in Bezug auf die Kurbelwelle des Verbrennungsmotors kompensieren zu können, kann die Kurbelwelle über ein in Axialrichtung der Kurbelwelle elastisches Element (sogenannte "Flexplate") mit dem Antriebselement des Torsionsschwingungsdämpfers verbunden sein. Das elastische Element kann über mehrere in Umfangsrichtung verteilt angeordnete Schrauben mit dem Antriebselement des Torsionsschwingungsdämpfers verschraubt werden.

Nach einer Weiterbildung der Erfindung sind die Schrauben schräg in Bezug auf die Axialrichtung des Antriebsstrangs bzw. der Kurbelwelle angeordnet. Sie werden vorzugsweise von der Seite des Verbrennungsmotors her in das Antriebselement des Torsionsschwingungsdämpfers eingeschraubt. Um ein Anziehen der Schrauben zu ermöglichen, kann in der Wandung des Gehäuses des Verbrennungsmotors eine Montageöffnung vorgesehen sein. Über die Montageöffnung können in geeigneten Drehstellungen des Torsionsschwingungsdämpfers, bzw. des Antriebsstrangs die einzelnen Schrauben nacheinander mittels eines Steckschlüssels angezogen bzw. gelöst werden.

Im Folgenden wird die Erfindung im Zusammenhang mit der Zeichnung näher erläutert. Es zeigen:
- Figur 1: eine Zusammenbauzeichnung in Schnittdarstellung eines an einen Verbrennungsmotor angeflanschten Hybridkopfes, der wiederum an ein Automatikgetriebe angeflanscht ist;
- Figur 2: ein hybridkopfseitiges Ende eines Automatikgetriebes gemäß der Erfindung;
- Figur 3: das Automatikgetriebe der Figur 2, an das ein Hybridkopf angeflanscht ist;
- Figur 4: die in Figur 3 gezeigte Einheit, wobei in den Hybridkopf eine elektrische Maschine eingebaut ist;

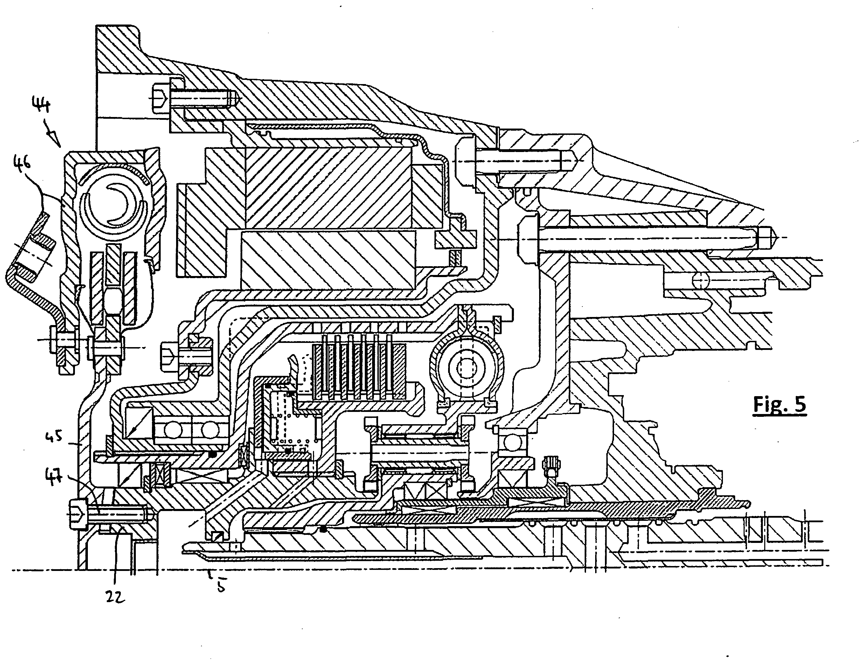

- Figur 5: die in Figur 4 gezeigte Anordnung, wobei an den Hybridkopf ein Torsionsschwingungsdämpfer angebaut ist; und
- Figur 6: eine Stirnansicht des Rumpfgetriebes von der Antriebsseite her.

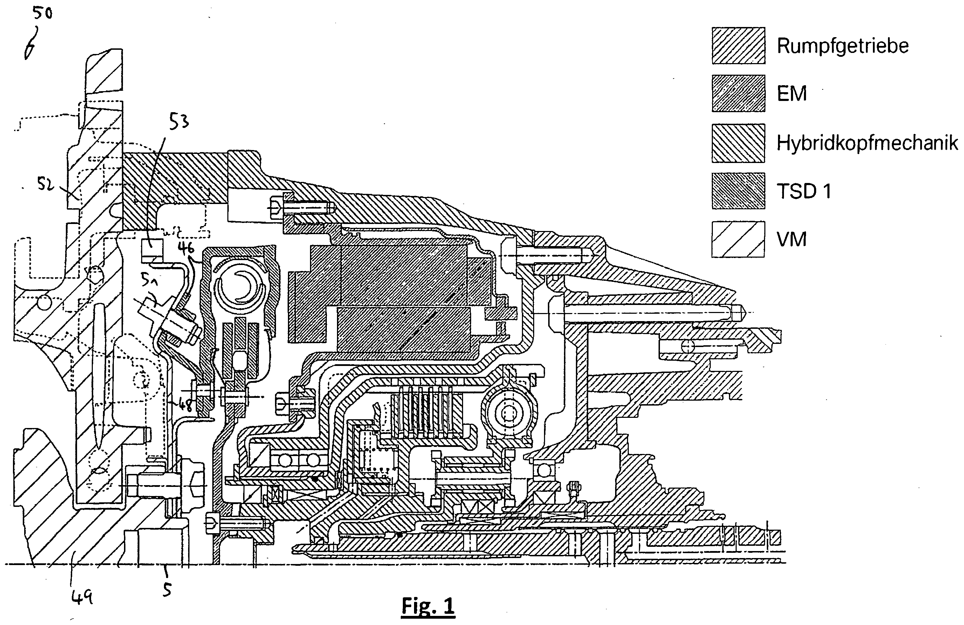

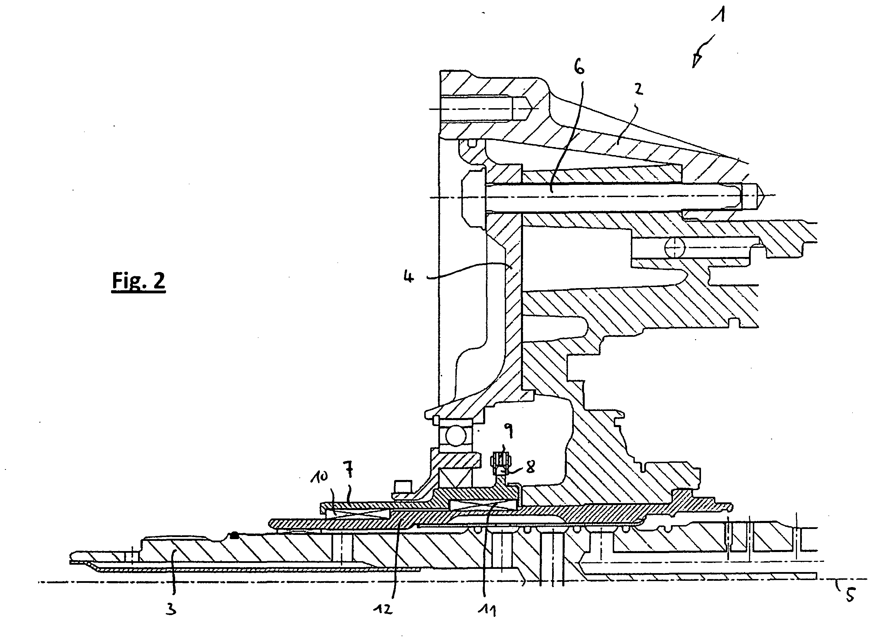

Im Folgenden wird die Montage der einzelnen Komponenten beginnend mit Figur 2 erläutert, wobei immer wieder auch auf die Zusammenbauzeichnung der Figur 1 Bezug genommen wird.

Figur 2 zeigt einen Halbschnitt durch einen antriebsseitigen Teil eines Automatikgetriebes 1, welches ein Getriebegehäuse 2 und eine drehbar angeordnete Getriebeeingangswelle 3 aufweist. Das Getriebegehäuse des Automatikgetriebes 1 ist auf der Antriebsseite durch einen Gehäusedeckel 4 verschlossen. Der Gehäusedeckel 4 ist über in Axialrichtrung 5 der Getriebeeingangswelle 3 von der Getriebeeingangsseite her eingeschraubte Schrauben 6 mit dem mit den Bezugszeichen 2 gekennzeichneten Gehäuseelement verschraubt.

Wie aus Figur 2 ersichtlich ist, ragt aus dem Getriebegehäuse 2 antriebsseitig ein durch eine Hohlwelle gebildeter Ölpumpenantrieb 7 heraus. Der Ölpumpenantrieb 7 ist drehbar in dem Getriebegehäuse gelagert. Erweist ein Zahnrad 8 auf, welches über eine Kette 9 oder einen Riemen mit einer im Getriebegehäuse 2 angeordneten, mechanisch angetriebenen Ölpumpe (nicht dargestellt) gekoppelt ist. Der Ölpumpenantrieb 7 ist über Wälzlager 10, 11 auf einem gehäusefest in Bezug auf das Getriebegehäuse 2 angeordneten "Leitradsupport" 12 gelagert.

Bei der Ölpumpe (nicht dargestellt) kann es sich z.B. um eine Flügelzellenpumpe handeln. Sie kann parallel zur Axialrichtung und versetzt zu der Achse 5 angeordnet sein. Alternativ zu der in Fig. 2 gezeigten Anordnung kann das Zahnrad 8 auch unmittelbar Teil einer koaxial zu der Achse 5 angeordneten Innenzahnradpumpe oder einer Sichelpumpe sein.

Wenn das Automatikgetriebe 1 nicht für einen Hybridantriebsstrang, sondern für einen herkömmlichen Antriebsstrang eingesetzt werden soll, dann dient der Leitradsupport 12 zur Lagerung eines Leitrades eines Drehmomentwandlers. Das in Figur 1 gezeigte Automatikgetriebe kann somit sowohl für einen herkömmlichen Antriebsstrang als auch für zur hybridisierenden Antriebsstrang eingesetzt werden. Wie aus Figur 2 ersichtlich ist, handelt es sich bei dem Leitradsupport 12 um eine Art gehäusefest angeordnete Hohlwelle, die ihrerseits in dem als Hohlwelle ausgebildete Ölpumpenantrieb 7 angeordnet ist. In der den Leitradsupport 12 bildenden Hohlwelle wiederum ist die Getriebeeingangswelle 3 angeordnet.

Das Automatikgetriebe 1 kann beim Getriebehersteller komplett vorgefertigt und geprüft werden. Um Beschädigungen während des Transports zu vermeiden, insbesondere derjenigen Komponenten 3, 7, 12, welche aus dem Getriebegehäuse 2 herausstehen, kann vorgesehen sein, dass die Antriebsseite des Automatikgetriebes 1 während des Transports durch einen Schutzdeckel vor Beschädigung und Verschmutzung geschützt wird.

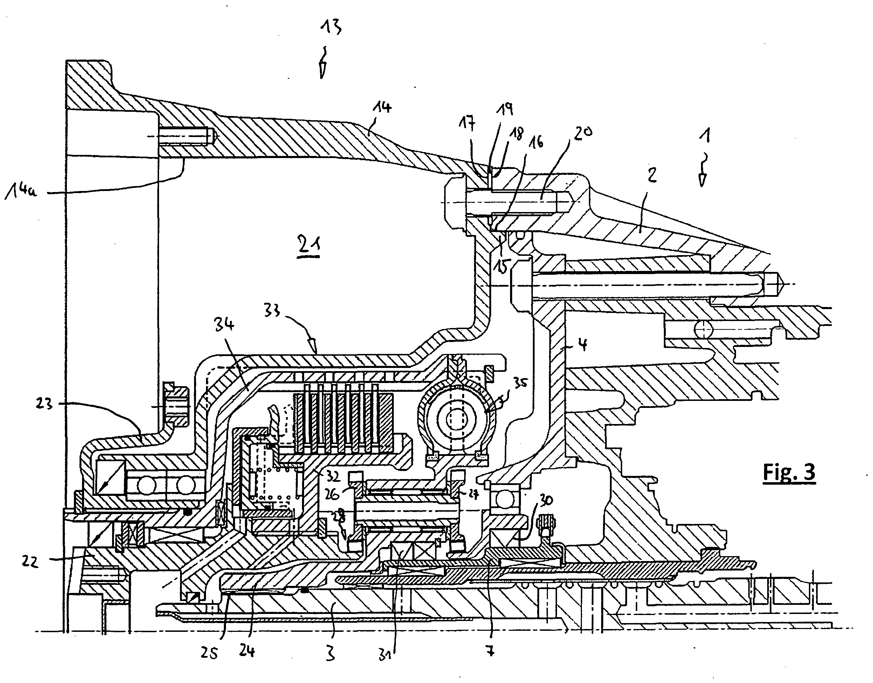

Nach dem der Schutzdeckel abgenommen worden ist, kann ein Hybridkopf 13 an das Automatikgetriebe 1 angeflanscht werden, was in Figur 3 dargestellt ist. Der Hybridkopf 13 weist ein Hybridkopfgehäuse 14 auf, welches über einen Zentrierbund 15, welcher mit einem Absatz 16 des Getriebegehäuses 2 zusammenwirkt, in Bezug auf das Gehäuse 2 des Automatikgetriebes 1 zentriert ist. Zwischen eine dem Automatikgetriebegehäuse 2 zugewandte Stirnfläche 17 des Hybridkopfgehäuses 14 und eine dem Hybridkopfgehäuse 14 zugewandte Stirnfläche 18 des Automatikgetriebegehäuses 2 wird eine Dichtung 19 eingebracht, welche das Hybridkopfgehäuse 14 gegenüber dem Automatikgetriebegehäuse 2 öldicht abdichtet.

Anschließend wird das Hybridkopfgehäuse 14 von der Seite des Hybridkopfgehäuses 14 her mit dem Automatikgetriebegehäuse 2 über mehrere in Umfangsrichtung verteilt angeordnete Schrauben, von denen hier lediglich eine Schraube 20 dargestellt ist, verschraubt. Das Anziehen der Schraube 20 erfolgt in einem ringzylindrischen Raum 21 des Hybridkopfgehäuses 14, in den später die elektrische Maschine eingebaut wird.

Der Hybridkopf 13 fungiert als Drehmomentüberlagerungseinrichtung. Er weist einen ersten drehbar angeordneten Eingang auf, der im Folgenden als Verbrennungsmotorantriebselement 22 bezeichnet wird, einen zweiten Eingang, der im Folgenden als Rotorantriebselement 23 bezeichnet wird und ein Abtriebselement 24, das über eine Welle-Nabe-Verbindung 25 mit der Getriebeeingangswelle 3 des Automatikgetriebes 1 drehgekoppelt ist.

Das Abtriebselement 24 ist durch einen drehbar angeordneten Planetenträger gelagert, in dem wiederum erste und zweite Planetenräder 26, 27 mehrerer in Umfangsrichtung verteilt angeordneter Doppelplaneten drehbar gelagert sind. Die ersten Planetenräder 26 kämmen mit einer zugeordneten Verzahnung 28 des Verbrennungsmotorantriebselements 22. Die zweiten Planetenräder 27 kämmen mit einem im Gehäusedeckel 4 gelagerten Rad 29, das über einen Freilauf 30 mit dem Ölpumpenantrieb 7 gekoppelt ist. Das Abtriebselement 24 ist ebenfalls über einen Freilauf 31 mit dem Ölpumpenantrieb 7 gekoppelt.

Fest mit dem Verbrennungsmotorantriebselement 22 verbunden ist ein Innenlamellenträger 32 einer als Anfahrkupplung ausgelegten Lamellenkupplung 33. Ein Außenlamellenträger 34 der Lamellenkupplung 33 ist drehbar in dem Hybridkopfgehäuse 14 gelagert und über einen Torsionsschwingungsdämpfer 35 in Drehrichtung elastisch mit dem Abtriebselement 24, welches als Planetenträger fungiert, drehgekoppelt. Bei geschlossener Lamellenkupplung 33 ist somit eine Drehmomentübertragung von dem Verbrennungsmotorantriebselement 22 auf das Abtriebselement 24 möglich.

Die im Automatikgetriebe 1 verbaute mechanische Ölpumpe wird je nach Betriebszustand über den Freilauf 30 bzw. 31 vom Verbrennungsmotor oder der elektrischen Maschine (s. u.) angetrieben.

Wie aus Figur 3 ersichtlich ist, weist der Hybridkopf 13 primär mechanische Komponenten sowie eine zur Betätigung der Lamellenkupplung 33 vorgesehene Betätigungshydraulik 36 auf.

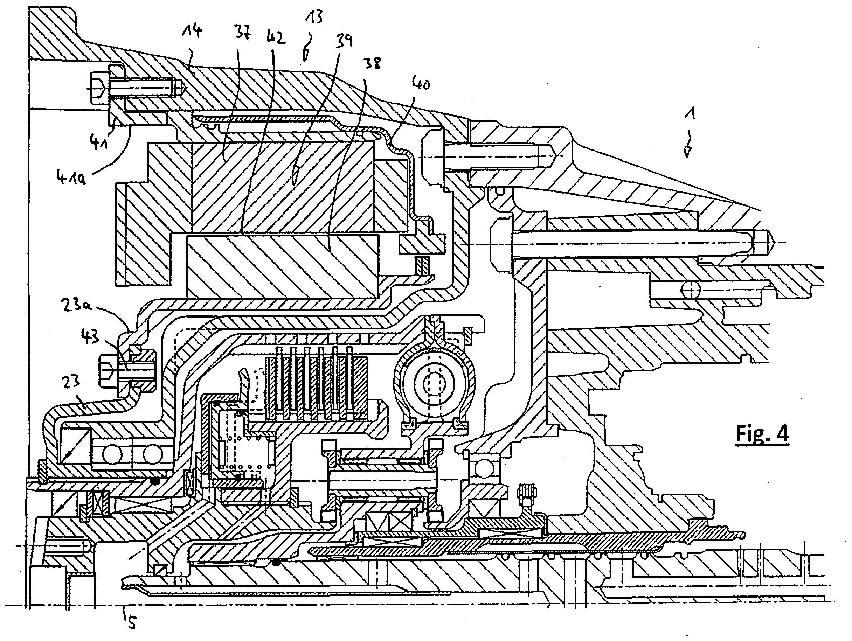

Figur 4 zeigt den nächsten Montageschritt. Nach dem Anflanschen des Hybridkopfes 13 an das Automatikgetriebe 1 wird die durch einen Stator 37 und einen Rotor 38 gebildete elektrische Maschine 39 in den kreiszylindrischen Raum 21 (vgl. Figur 3) des Hybridkopfes 13 eingebaut. Eine Innenfläche 14a (vgl. Figur 3) dient als Zentrierfläche für den Stator 37. Der Stator 37 wird hierzu mittels eines Halteblechs 40 und Spannelementen 41, welche von der Seite des Verbrennungsmotors (vgl. Figur 1) her mit dem Hybridkopfgehäuse 14 verschraubt werden, in dem Hybridkopfgehäuse 14 positioniert und fixiert.

Während der Montage der elektrischen Maschine 39 sind der Stator 37 und der Rotor 38 durch eine Montagehilfe exakt relativ zueinander positioniert, wodurch sichergestellt wird, dass zwischen dem Stator 37 und dem Rotor 38 ein vordefinierter Luftspalt 42 eingehalten wird. Die Flächen 41a der Spannelemente 41 und die Fläche 23a des Rotorantriebselements 23 dienen dabei als Zentrierflächen zum Ansetzen der Montagehilfe (nicht dargestellt).

Anschließend wird der Stator 37 in der zuvor beschriebenen Weise im Hybridkopf 13 fixiert. Der Rotor 38 wird über mehrere in Umfangsrichtung verteilt angeordnete, sich in Axialrichtung 5 erstreckende Schrauben 43 mit dem Rotorantriebselement 23 des Hybridkopfes verschraubt. Das Verschrauben erfolgt von der Seite des Verbrennungsmotors her. Nach dem Fixieren des Stators 37 und des Rotors 38 kann die Montagehilfe (nicht dargestellt) entfernt werden.

In einem weiteren Montageschritt wird ein Torsionsschwingungsdämpfer 44, der ein Abtriebselement 45 und ein Antriebselement 46 aufweist, montiert. Hierzu wird das Abtriebselement 45 mit dem Verbrennungsmotorantriebselement 22 über mehrere in Umfangsrichtung verteilt angeordnete, sich in Axialrichtung 5 erstreckende Schrauben 47 verschraubt.

In einem weiteren Montageschritt wird, wie in Figur 1 dargestellt, das Antriebselement 46 des Torsionsschwingungsdämpfers über eine in Axialrichtung 5 biegeelastische Platte (Flexplate) 48 mit einer Kurbelwelle 49 eines Verbrennungsmotors 50 drehgekoppelt. Die Verbindung zwischen der elastischen Platte 48 und dem Antriebselement 46 erfolgt über mehrere in Umfangsrichtung verteilt angeordnete Schrauben 51, die hier schräg in Bezug auf die Axialrichtung 5 angeordnet sind. Bei geeigneter Drehstellung können die Schrauben über eine in der Wandung 52 des Verbrennungsmotorgehäuses vorgesehene Montageöffnung (nicht dargestellt) angezogen bzw. gelöst werden. Sofern hinreichend Bauraum vorhanden ist, können die Schrauben 51 auch parallel zur Axialrichtung 5 angeordnet sein.

Vollständigkeitshalber sei noch ein Starterzahnkranz 53 erwähnt, der an der elastischen Platte 48 angeordnet ist und mit einem hier nicht näher dargestellten Anlasser, der zum Starten des Verbrennungsmotors 50 vorgesehen ist, zusammenwirkt.

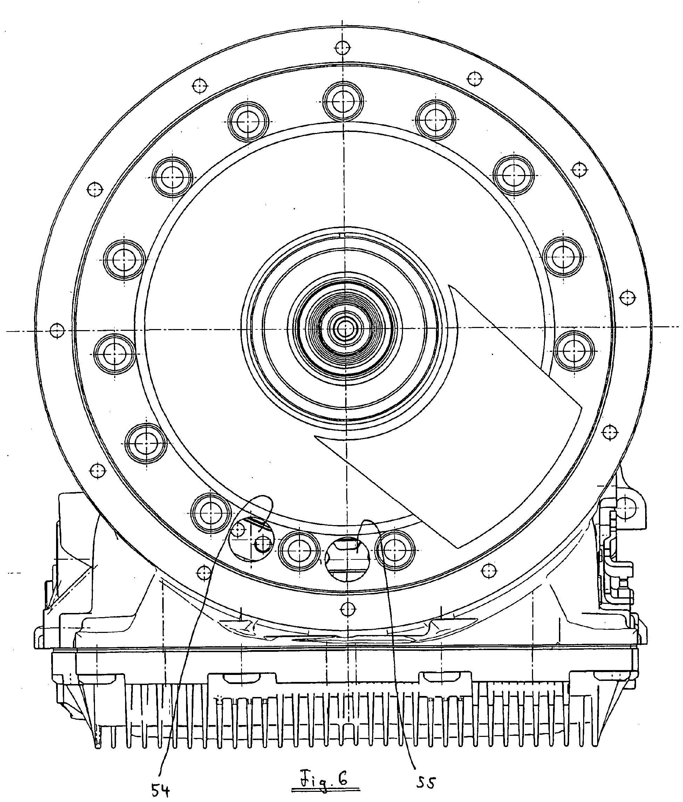

Figur 6 zeigt eine Stirnansicht des Automatikgetriebes 1 (Rumpfgetriebes) von der Antriebsseite her. Die Bezugszeichen 54, 55 verdeutlichen, wo Ölrückläufe angeordnet sein können.

## Patentansprüche

1. Verfahren zur Montage von Antriebsstrangkomponenten eines Hybridantriebs, wobei folgende Komponenten bereitgestellt werden:
- ein Automatikgetriebe (1), welches ein Getriebegehäuse (2) und eine Getriebeeingangswelle (3) aufweist,
- ein als separate Baugruppe vormontierter Hybridkopf (13), welcher ein Hybridkopfgehäuse (14), ein Verbrennungsmotorantriebselement (22), ein Rotorantriebselement (23) und ein Abtriebselement (24) aufweist, sowie
- eine elektrische Maschine (39), welche einen Stator (37) und einen Rotor (38) aufweist, wobei
- das Hybridkopfgehäuse (14) an das Getriebegehäuse (2) angeflanscht und das Abtriebselement (24) über eine Welle-Nabe-Verbindung (25) mit der Getriebeeingangswelle (3) drehgekoppelt wird, und anschließend
- die elektrische Maschine (3) in das Hybridkopfgehäuse (14) eingebaut wird, wobei der Stator (37) mit dem Hybridkopfgehäuse (14) und der Rotor (38) mit dem Rotorantriebselement (23) verbunden wird.

2. Verfahren nach Anspruch 1, **dadurch gekennzeichnet, dass** das Automatikgetriebe bereits vor der Montage des Hybridkopfes (13) mit Getriebeöl befüllt wird.

3. Verfahren nach einem der Ansprüche 1 oder 2, **dadurch gekennzeichnet, dass** das Automatikgetriebe (1) auf der dem Hybridkopf (13) zugewandten Seite durch einen Gehäusedeckel (4) verschlossen wird, wobei der Gehäusedeckel (4) mit dem übrigen Getriebegehäuse (2) von der Seite des Hybridkopfes (13) her verschraubt wird.

4. Verfahren nach einem der Ansprüche 1 bis 3, **dadurch gekennzeichnet, dass** die Getriebeeingangswelle (3) so gestaltet und angeordnet wird, dass sie aus dem Getriebegehäuse (2, 4) heraussteht.

5. Verfahren nach einem der Ansprüche 1 bis 4, **dadurch gekennzeichnet, dass** das Automatikgetriebe (1) eine aus dem Getriebegehäuse (2, 4) herausstehende Hohlwelle (7) aufweist, welche als Antriebswelle für eine in dem Getriebegehäuse (2, 4) angeordnete, mechanisch angetriebene Getriebeölpumpe fungiert, wobei ein Ölpumpenantrieb (30, 31) des Hybridkopfes (13) vor oder während des Anflanschens des Hybridkopfgehäuses (14) an das Getriebegehäuse (2) mit der Antriebswelle (7) für die Getriebeölpumpe gekoppelt wird.

6. Verfahren nach Anspruch 5, **dadurch gekennzeichnet, dass** die Getriebeeingangswelle (3) in der Hohlwelle (7) angeordnet wird.

7. Verfahren nach einem der Ansprüche 1 bis 6, **dadurch gekennzeichnet, dass** das Hybridkopfgehäuse (14) mittels eines Zentrierbunds (15) radial in Bezug auf das Getriebegehäuse (2) zentriert wird.

8. Verfahren nach einem der Ansprüche 1 bis 7, **dadurch gekennzeichnet, dass** zwischen eine dem Automatikgetriebegehäuse (2) zugewandte Stirnfläche (17) des Hybridkopfgehäuses (14) und eine dem Hybridkopfgehäuse (14) zugewandte Stirnfläche (18) des Automatikgetriebegehäuses (2) eine Dichtung (19) eingebracht wird, welche das Hybridkopfgehäuse (14) öldicht abdichtet.

9. Verfahren nach einem der Ansprüche 1 bis 8, **dadurch gekennzeichnet, dass** das Hybridkopfgehäuse (14) von der Seite des Hybridkopfgehäuses (14) her mit dem Automatikgetriebegehäuse (2) verbunden, insbesondere damit verschraubt wird.

10. Verfahren nach einem der Ansprüche 1 bis 9, **dadurch gekennzeichnet, dass** in den Hybridkopf (13) eine als Anfahrkupplung (33) bestimmte und geeignete Kupplung eingebaut wurde.

11. Verfahren nach Anspruch 10, **dadurch gekennzeichnet, dass** die Anfahrkupplung (33) über eine Betätigungshydraulik (36) betätigbar ist.

12. Verfahren nach einem der Ansprüche 10 oder 11, **dadurch gekennzeichnet, dass** es sich bei der Anfahrkupplung (33) um eine in dem Getriebeöl des Automatikgetriebes (1) laufende Mehrscheibenlamellenkupplung (33) handelt.

13. Verfahren nach einem der Ansprüche 10 bis 12, **dadurch gekennzeichnet, dass** die Anfahrkupplung (33) über einen in der Getriebeeingangswelle vorgesehenen Ölkanal mit Getriebeöl des Automatikgetriebes (1) versorgt wird.

14. Verfahren nach einem der Ansprüche 1 bis 13, **dadurch gekennzeichnet, dass** der Hybridkopf (13) einen Torsionsschwingungsdämpfer (35) aufweist.

15. Verfahren nach einem der Ansprüche 1 bis 14, **dadurch gekennzeichnet, dass** vor dem Einbau der elektrischen Maschine (39) in den Hybridkopf (13) der Rotor (38) mittels eines nur für die Montage vorgesehenen Positionierungselements in einer vordefinierten Position in Bezug auf den Stator (37) gehalten wird, wobei das Positionierungselement nach dem Verbinden des Stators (37) mit dem Hybridkopfgehäuse (14) und des Rotors (38) mit dem Rotorantriebselement (23) entfernt wird.

16. Verfahren nach einem der Ansprüche 1 bis 15, **dadurch gekennzeichnet, dass** der Stator (37) mit dem Hybridkopfgehäuse (14) verschraubt wird.

17. Verfahren nach einem der Ansprüche 1 bis 16, **dadurch gekennzeichnet, dass** der Rotor (38) mit dem Rotorantriebselement (23) verschraubt wird.

18. Verfahren nach einem der Ansprüche 16 oder 17, **dadurch gekennzeichnet, dass** der Stator (37) von einer Verbrennungsmotorseite des Hybridkopfgehäuses (14) her mit dem Hybridkopfgehäuse (14) und der Rotor (38) von einer Verbrennungsmotorseite des Hybridkopfgehäuses (14) her mit dem Rotorantriebselement (23) verschraubt wird.

19. Verfahren nach einem der vorangehenden Ansprüche, **dadurch gekennzeichnet, dass** nach dem Einbau der elektrischen Maschine (39) ein Verbrennungsmotorantriebselement (22) des Hybridkopfes (13) mit einer Kurbelwelle (49) eines Verbrennungsmotors (50) gekoppelt wird.

20. Verfahren nach einem der vorangehenden Ansprüche, **dadurch gekennzeichnet, dass** der Hybridkopf (13) eine Komponente ist, mit der ein an dem Verbrennungsmotorantriebselement (22) anliegendes Drehmoment einem von der elektrischen Maschine (39) erzeugten Drehmoment zu einem auf die Getriebeeingangswelle (3) zu übertragenden Drehmoment überlagerbar ist.

21. Verfahren nach einem der vorangehenden Ansprüche, **dadurch gekennzeichnet, dass** der Hybridkopf (13) primär oder ausschließlich mechanische und hydraulische Komponenten enthält.

22. Verfahren nach einem der Ansprüche 19 bis 21, **dadurch gekennzeichnet, dass** das Hybridkopfgehäuse (14) unmittelbar oder über ein ringartiges Distanzelement an ein Gehäuse (52) des Verbrennungsmotors (50) angeflanscht wird.

23. Verfahren nach einem der Ansprüche 19 bis 22, **dadurch gekennzeichnet, dass** das Verbrennungsmotorantriebselement (22) des Hybridkopfes (13) über einen Torsionsschwingungsdämpfer (44) mit der Kurbelwelle (49) drehgekoppelt wird.

24. Verfahren nach einem der vorangehenden Ansprüche, **dadurch gekennzeichnet, dass** zunächst ein Abtriebselement (45) des Torsionsschwingungsdämpfers (44) mit dem Verbrennungsmotorantriebselement (22) des Hybridkopfes (13) verschraubt und anschließend ein Antriebselement des Torsionsschwingungsdämpfers (44) mit der Kurbelwelle (49) drehgekoppelt wird.

25. Verfahren nach einem der vorangehenden Ansprüche, **dadurch gekennzeichnet, dass** ein zum Starten des Verbrennungsmotors bestimmter Starterzahnkranz (53) an das Antriebselement (46) des Torsionsschwingungsdämpfers (44) angeschraubt wird.

26. Verfahren nach einem der vorangehenden Ansprüche, **dadurch gekennzeichnet, dass** die Kurbelwelle (49) über ein in einer Axialrichtung (5) der Kurbelwelle (49) elastisches Element (48) mit dem Antriebselement (46) des Torsionsschwingungsdämpfers (44) verbunden wird.

27. Verfahren nach Anspruch 26, **dadurch gekennzeichnet, dass** das elastische Element (48) über mehrere in Umfangsrichtung verteilt angeordnete Schrauben (51) mit dem Antriebselement (46) des Torsionsschwingungsdämpfers (44) verschraubt wird.

28. Verfahren nach Anspruch 27, **dadurch gekennzeichnet, dass** die Schrauben (51) schräg in Bezug auf die Axialrichtung (5) und von der Seite des Verbrennungsmotors (50) her in das Antriebselement (46) des Torsionsschwingungsdämpfers (44) eingeschraubt werden.

29. Verfahren nach Anspruch 28, **dadurch gekennzeichnet, dass** in einer Wandung (52) des Gehäuses des Verbrennungsmotors (50) eine Montageöffnung vorgesehen ist, über die in geeigneten Drehstellungen des Torsionsschwingungsdämpfers (44) die einzelnen Schrauben (51) mittels eines Steckschlüssels angezogen bzw. gelöst werden können.

## Claims

1. A method for assembling drive train components of a hybrid drive, wherein the following components are provided:
- an automatic gearbox (1), which has a gearbox casing (2) and a gearbox input shaft (3),
- a hybrid head (13), preassembled as a separate assembly, which has a hybrid head casing (14), an internal-combustion engine drive element (22), a rotor drive element (23) and an output element (24), and
- an electric machine (39) which has a stator (37) and a rotor (38), wherein
- the hybrid head casing (14) is flange-connected to the gearbox casing (2) and the output element (24) is rotationally coupled with the gearbox input shaft (3) via a shaft/hub connection (25), and then
- the electric machine (3) is installed in the hybrid head casing (14), wherein the stator (37) is connected to the hybrid head casing (14) and the rotor (38) is connected to the rotor drive element (23).

2. A method according to Claim 1, **characterised in that** the automatic gearbox is filled with gearbox oil even prior to the assembly of the hybrid head (13).

3. A method according to one of Claims 1 or 2, **characterised in that** the automatic gearbox (1) is closed by a casing cover (4) on the side facing the hybrid head (13), the casing cover (4) being screwed to the rest of the gearbox casing (2) from the side of the hybrid head (13).

4. A method according to one of Claims 1 to 3, **characterised in that** the gearbox input shaft (3) is configured and arranged such that it projects out of the gearbox casing (2, 4).

5. A method according to one of Claims 1 to 4, **characterised in that** the automatic gearbox (1) has a hollow shaft (7) which projects out of the gearbox casing (2, 4), which shaft acts as a drive shaft for a mechanically driven gearbox-oil pump arranged in the gearbox casing (2, 4), with an oil-pump drive (30, 31) of the hybrid head (13) being coupled with the drive shaft (7) for the gearbox-oil pump prior to or during the flange connection of the hybrid head casing (14) to the gearbox casing (2).

6. A method according to Claim 5, **characterised in that** the gearbox input shaft (3) is arranged in the hollow shaft (7).

7. A method according to one of Claims 1 to 6, **characterised in that** the hybrid head casing (14) is centred radially with respect to the gearbox casing (2) by means of a centring collar (15).

8. A method according to one of Claims 1 to 7, **characterised in that** a seal (19) which seals off the hybrid head casing (14) in oil-tight manner is introduced between an end face (17) of the hybrid head casing (14) which faces the automatic gearbox casing (2) and an end face (18) of the automatic gearbox casing (2) which faces the hybrid head casing (14).

9. A method according to one of Claims 1 to 8, **characterised in that** the hybrid head casing (14) is connected, especially screwed, to the automatic gearbox casing (2) from the side of the hybrid head casing (14).

10. A method according to one of Claims 1 to 9, **characterised in that** a clutch which is intended and suitable as a starting clutch (33) has been installed in the hybrid head (13).

11. A method according to Claim 10, **characterised in that** the starting clutch (33) can be actuated via a hydraulic actuating mechanism (36).

12. A method according to one of Claims 10 or 11, **characterised in that** the starting clutch (33) is a multi-plate clutch (33) which runs in the gearbox oil of the automatic gearbox (1).

13. Method according to one of Claims 10 to 12, **characterised in that** the starting clutch (33) is supplied with gearbox oil of the automatic gearbox (1) via an oil duct provided in the gearbox input shaft.

14. A method according to one of Claims 1 to 13, **characterised in that** the hybrid head (13) has a torsional vibration damper (35).

15. A method according to one of Claims 1 to 14, **characterised in that**, prior to the installation of the electric machine (39) in the hybrid head (13), the rotor (38) is held in a predefined position with respect to the stator (37) by means of a positioning element which is provided only for assembly, the positioning element being removed once the stator (37) has been connected to the hybrid head casing (14) and the rotor (38) has been connected to the rotor drive element (23).

16. A method according to one of Claims 1 to 15, **characterised in that** the stator (37) is screwed to the hybrid head casing (14).

17. A method according to one of Claims 1 to 16, **characterised in that** the rotor (38) is screwed to the rotor drive element (23).

18. A method according to one of Claims 16 or 17, **characterised in that** the stator (37) is screwed to the hybrid head casing (14) from an internal-combustion engine side of the hybrid head casing (14), and the rotor (38) is screwed to the rotor drive element (23) from an internal-combustion engine side of the hybrid head casing (14).

19. A method according to one of the preceding claims, **characterised in that** once the electric machine (39) has been installed an internal-combustion engine drive element (22) of the hybrid head (13) is coupled with a crankshaft (49) of an internal combustion engine (50).

20. A method according to one of the preceding claims, **characterised in that** the hybrid head (13) is a component with which a torque applied to the internal-combustion engine drive element (22) can be superposed on a torque generated by the electric machine (39) to a torque which is to be transmitted to the gearbox input shaft (3).

21. A method according to one of the preceding claims, **characterised in that** the hybrid head (13) contains primarily or exclusively mechanical and hydraulic components.

22. A method according to one of Claims 19 to 21, **characterised in that** the hybrid head casing (14) is flange-connected directly or via a ring-like spacer element to a casing (52) of the internal combustion engine (50).

23. A method according to one of Claims 19 to 22, **characterised in that** the internal-combustion engine drive element (22) of the hybrid head (13) is rotationally coupled with the crankshaft (49) via a torsional vibration damper (44).

24. A method according to one of the preceding claims, **characterised in that** initially an output element (45) of the torsional vibration damper (44) is screwed to the internal-combustion engine drive element (22) of the hybrid head (13) and then a drive element of the torsional vibration damper (44) is rotationally coupled with the crankshaft (49).

25. A method according to one of the preceding claims, **characterised in that** a starter ring gear (53) intended for starting the internal combustion engine is screwed onto the drive element (46) of the torsional vibration damper (44).

26. A method according to one of the preceding claims, **characterised in that** the crankshaft (49) is connected to the drive element (46) of the torsional vibration damper (44) via an element (48) which is elastic in an axial direction (5) of the crankshaft (49).

27. A method according to Claim 26, **characterised in that** the elastic element (48) is screwed to the drive element (46) of the torsional vibration damper (44) via a plurality of screws (51) arranged distributed in the peripheral direction.

28. A method according to Claim 27, **characterised in that** the screws (51) are screwed into the drive element (46) of the torsional vibration damper (44) obliquely with respect to the axial direction (5) and from the side of the internal combustion engine (50).

29. A method according to Claim 28, **characterised in that** an assembly opening is provided in a wall (52) of the casing of the internal combustion engine (50), via which opening the individual screws (51) can be tightened or loosened by means of a wrench in suitable rotary positions of the torsional vibration damper (44).

## Revendications

1. Procédé de montage de composants d'une ligne d'entraînement d'un entraînement hybride, selon lequel on se procure les composants suivants :
- une boîte de vitesses automatique (1) comportant un carter de boîte de vitesses (2) et un arbre d'entrée (3),
- une tête hybride (13) préalablement montée sous la forme d'un ensemble séparé, et qui comporte un carter (14), un élément d'entraînement d'un moteur à combustion interne (22), un élément d'entraînement de rotor (23) et un élément de sortie (24), et
- une machine électrique (39) qui comporte un stator (37) et un rotor (38),
- le carter de la tête hybride (14) est bridé sur le carter de la boîte de vitesses (2) et l'élément de sortie (24) est couplé en rotation à l'arbre d'entrée (3) de la boîte de vitesses par une liaison arbre-moyeu (25), puis
- la machine électrique (3) est montée dans le carter de la tête hybride (14), le stator (37) étant relié au carter de la tête hybride (14) et le rotor (38) étant relié à l'élément d'entraînement du rotor (23).

2. Procédé conforme à la revendication 1,
**caractérisé en ce que**
la boîte de vitesses automatique est remplie d'huile de boîte de vitesses avant le montage de la tête hybride (13).

3. Procédé conforme à l'une des revendications 1 et 2,
**caractérisé en ce que**
la boîte de vitesses automatique (1) est fermée, du côté tourné vers la tête hybride (13) par un couvercle de carter (4), le couvercle du carter (4) étant vissé à la partie restante du carter de la boîte de vitesses (2) côté tête hybride (13).

4. Procédé conforme à l'une des revendications 1 à 3,
**caractérisé en ce que**
l'arbre d'entrée (3) de la boîte de vitesses est conformé et monté de façon à dépasser du carter de la boîte de vitesses (2, 4).

5. Procédé conforme à l'une des revendications 1 à 4,
**caractérisé en ce que**
la boîte de vitesses automatique (1) comporte un arbre creux (7) dépassant du carter (2, 4) de celle-ci qui fait fonction d'arbre d'entraînement d'une pompe à huile de boîte de vitesses à entraînement mécanique montée dans le carter de la boîte de vitesses (2, 4), un entraînement de pompe à huile (30, 31) de la tête hybride (13) étant couplé à l'arbre d'entraînement (7) de la pompe à huile de la boîte de vitesses avant ou pendant le bridage du carter de la tête hybride (14) sur le boîtier de la boite de vitesse (2).

6. Procédé conforme à la revendication 5,
**caractérisé en ce que**
l'arbre d'entrée de la boîte de vitesses (3) est monté dans l'arbre creux (7).

7. Procédé conforme à l'une des revendications 1 à 6,
**caractérisé en ce que**
le boîtier de la tête hybride (14) est centré radialement par rapport au carter de la boîte de vitesses (2) au moyen d'un collier de centrage (15).

8. Procédé conforme à l'une des revendications 1 à 7,
**caractérisé en ce qu'**
entre la surface frontale (17) du carter de la tête hybride (14) tournée vers le carter de la boîte de vitesses automatique (2) et la surface frontale (18) du carter de la boîte de vitesses automatique (2) tournée vers le carter de la tête hybride (14) est insérée un joint d'étanchéité (19) qui réalise l'étanchéité à l'huile du carter de la tête hybride (14).

9. Procédé conforme à l'une des revendications 1 à 8,
**caractérisé en ce que**
le carter de la tête hybride (14) est relié au carter de la boîte de vitesses automatique (2) et en particulier vissé à celui-ci du côté du carter de la tête hybride (14).

10. Procédé conforme à l'une des revendications 1 à 9,
**caractérisé en ce que**
dans la tête hybride (13) a été monté un embrayage défini et adapté en tant qu'embrayage de démarrage (33).

11. Procédé conforme à la revendication 10,
**caractérisé en ce que**
l'embrayage de démarrage (33) peut être actionné par une hydraulique d'actionnement (36).

12. Procédé conforme à l'une des revendications 10 et 11,
**caractérisé en ce que**
l'embrayage de démarrage (33) est constitué par un embrayage à disques multiples positionné dans l'huile de la boîte de vitesses automatique (1).

13. Procédé conforme à l'une des revendications 10 à 12,
**caractérisé en ce que**
l'embrayage de démarrage (33) est alimenté avec l'huile de la boîte de vitesses automatique (1) par un canal d'huile situé dans l'arbre d'entrée de la boîte de vitesses.

14. Procédé conforme à l'une des revendications 1 à 13,
**caractérisé en ce que**
la tête hybride (13) comporte un amortisseur d'oscillations de torsion (35).

15. Procédé conforme à l'une des revendications 1 à 14,
**caractérisé en ce qu'**
avant le montage de la machine électrique (39) dans la tête hybride (13), le rotor (38) est maintenu dans une position prédéfinie par rapport au stator (37) au moyen d'un élément de positionnement uniquement prévu pour le montage, cet élément de positionnement étant enlevé après la liaison du stator (37) avec le carter de la tête hybride (14) et du rotor (38) avec l'élément d'entraînement du rotor (23).

16. Procédé conforme à l'une des revendications 1 à 15,
**caractérisé en ce que**
le stator (37) est vissé avec le carter de la tête hybride (14).

17. Procédé conforme à l'une des revendications 1 à 16,
**caractérisé en ce que**
le rotor (38) est vissé avec l'élément d'entraînement du rotor (23).

18. Procédé conforme à l'une des revendications 16 et 17,
**caractérisé en ce que**
le stator (37) est vissé avec le carter de la tête hybride (14), et le rotor (38) est vissé avec l'élément d'entraînement du rotor (23) à partir du côté moteur à combustion interne du carter de la tête hybride (14).

19. Procédé conforme à l'une des revendications précédentes,
**caractérisé en ce qu'**
après le montage de la machine électrique (39), un élément d'entraînement du moteur à combustion interne (22) de la tête hybride (13) est couplé avec le vilebrequin (49) d'un moteur à combustion interne (50).

20. Procédé conforme à l'une des revendications précédentes,
**caractérisé en ce que**
la tête hybride (13) est un composant avec lequel un couple de rotation appliqué sur l'élément d'entraînement du moteur à combustion interne (22) peut être superposé à un couple de rotation produit par la machine électrique (39) pour obtenir un couple de rotation devant être transmis à l'arbre d'entrée (3) de la boîte de vitesses.

21. Procédé conforme à l'une des revendications précédentes,
**caractérisé en ce que**
la tête hybride (13) renferme des composants primaires ou exclusivement mécaniques et hydrauliques.

22. Procédé conforme à l'une des revendications 19 à 21,
**caractérisé en ce que**
le carter de la tête hybride (14) est bridé sur le carter (52) du moteur à combustion interne (50) directement ou par l'intermédiaire d'un élément d'écartement annulaire.

23. Procédé conforme à l'une des revendications 19 à 22,
**caractérisé en ce que**
l'élément d'entraînement (22) du moteur à combustion interne de la tête hybride (13) est couplé en rotation au vilebrequin (49) par l'intermédiaire d'un amortisseur des vibrations de torsion (44).

24. Procédé conforme à l'une des revendications précédentes,
**caractérisé en ce qu'**
un élément de sortie (45) de l'amortisseur d'oscillations de torsion (44) est tout d'abord, vissé avec l'élément d'entraînement (22) du moteur à combustion interne de la tête hybride (13), puis un élément d'entraînement de l'amortisseur de vibrations de torsion (44) est couplé en rotation avec le vilebrequin (49).

25. Procédé conforme à l'une des revendications précédentes,
**caractérisé en ce qu'**
une couronne dentée de démarrage (53) adaptée pour permettre le démarrage du moteur à combustion interne est vissée sur l'élément d'entraînement (46) de l'amortisseur d'oscillations de torsion (44).

26. Procédé conforme à l'une des revendications précédentes,
**caractérisé en ce que**
le vilebrequin (49) est relié a l'élément d'entraînement (46) de l'amortisseur d'oscillations de torsion (44) par l'intermédiaire d'un élément (48) élastique dans la direction axiale (5) du vilebrequin (49).

27. Procédé conforme à la revendication 26,
**caractérisé en ce que**
l'élément élastique (48) est vissé avec l'élément d'entraînement (46) de l'amortisseur d'oscillations de torsion (44) par l'intermédiaire de plusieurs vis (51) réparties en direction périphérique.

28. Procédé conforme à la revendication 27,
**caractérisé en ce que**
les vis (51) sont vissées dans l'élément d'entraînement (46) de l'amortisseur d'oscillations de torsion (44) obliquement par rapport à la direction axiale (5) et à partir du côté moteur à combustion interne (50).

29. Procédé conforme à la revendication 28,
**caractérisé en ce qu'**
il est prévu dans une paroi (52) du carter du moteur à combustion interne (50) une ouverture de montage par l'intermédiaire de laquelle, dans des positions de rotation adaptées de l'amortisseur d'oscillations de torsion (44) les différentes vis (51) peuvent être vissées ou desserrées par l'intermédiaire d'une clef à douille.
